(19) Europäisches Patentamt
European Patent Office
Office européen des brevets

(11) **EP 0 638 033 B1**

(12) **FASCICULE DE BREVET EUROPEEN**

(45) Date de publication et mention
de la délivrance du brevet:
**24.01.1996 Bulletin 1996/04**

(21) Numéro de dépôt: **93906658.5**

(22) Date de dépôt: **24.03.1993**

(51) Int. Cl.$^6$: **B60T 8/18**

(86) Numéro de dépôt international: **PCT/FR93/00292**

(87) Numéro de publication internationale: **WO 93/22167**
**(11.11.1993 Gazette 1993/27)**

(54) **COMPENSATEUR A PLUSIEURS PENTES**

VENTIL MIT MEHEREN DRUCKGRADIENTEN

MULTISLOPE COMPENSATOR

(84) Etats contractants désignés:
**DE ES FR GB IT**

(30) Priorité: **30.04.1992 FR 9205324**

(43) Date de publication de la demande:
**15.02.1995 Bulletin 1995/07**

(73) Titulaire: **ALLIEDSIGNAL EUROPE SERVICES TECHNIQUES**
**F-93700 Drancy (FR)**

(72) Inventeurs:
• **PRESSACO Pierre**
**F-93120 La Courneuve (FR)**
• **LEVRAI Roland**
**F-93240 Stains (FR)**

(74) Mandataire: **Bentz, Jean-Paul**
**F-93700 Drancy (FR)**

(56) Documents cités:
EP-A- 0 088 858          EP-A- 0 404 617
DE-A- 3 636 443          GB-A- 2 060 102

## Description

La présente invention concerne un dispositif, notamment utilisable dans un circuit hydraulique, pour faire varier une pression de sortie en fonction d'une pression d'entrée, comprenant :

- un corps allongé percé d'un alésage partagé en au moins deux chambres de pression remplies de fluide dont la première est soumise à la pression d'entrée et la seconde à la pression de sortie ;
- un premier piston coulissant dans l'alésage et servant à délimiter les première et seconde chambres, ce piston présentant des première et seconde sections de pression respectivement exposées aux pressions des première et seconde chambres,
- un clapet porté par le premier piston et coopérant avec un élément solidaire du corps allongé pour être ouvert ou fermé par cet élément en fonction de la position du premier piston dans l'alésage, ce clapet étant ouvert en permanence pour toute valeur de la pression d'entrée inférieure à une valeur limite, pour permettre un équilibre des pressions de fluide dans les première et seconde chambres, par un libre déplacement volumique entre ces chambres,
- des moyens d'appui exerçant sur le premier piston une force élastique dont dépend ladite valeur limite de pression et qui sollicite ce piston vers une position d'ouverture permanente pour laquelle le clapet est ouvert en permanence, et
- des moyens de réaction pour exercer sur le premier piston une force croissante avec la pression d'entrée à l'encontre de la force élastique et dans un sens qui tend à écarter ce piston de sa position d'ouverture permanente, et pour opposer une résistance au moins partielle à tout déplacement volumique depuis la première chambre vers la seconde pour des valeurs de la pression d'entrée supérieures à la valeur limite, ces moyens de réaction comprenant eux-mêmes: un second piston coulissant de façon étanche par rapport au premier et présentant une section de pression exposée à la pression de la première chambre au moins ; un organe déformable en appui sur le second piston au moins pour recevoir un effort qui déforme cet organe en fonction de la pression d'entrée au moins et pour permettre, par sa déformation, un déplacement relatif des deux pistons vers une position relative extrême sous l'effet d'une augmentation de la pression d'entrée ; et des moyens de blocage, propres à empêcher tout déplacement relatif supplémentaire des pistons dès que ceux-ci ont atteint leur position relative extrême.

Des dispositifs de ce type sont connus sous le nom de compensateurs et sont utilisés depuis de nombreuses années dans les circuits hydrauliques de freinage pour les véhicules à moteur.

Plus précisément les compensateurs sont interposés sur les circuits hydrauliques en amont des actionneurs de freins de roues arrière de manière à ne transmettre à ces derniers, aux fortes pressions de freinage, qu'une partie seulement de la pression alimentant les actionneurs de roues avant et empêcher ainsi le blocage intempestif des roues arrière.

Les compensateurs permettent traditionnellement de faire varier la pression de sortie non seulement en fonction de la pression d'entrée mais aussi en fonction de la charge appliquée par les moyens d'appui sur le premier piston, cette charge dépendant elle-même de la charge supportée par les roues arrière du véhicule.

En revanche, les compensateurs classiques ne permettent, pour une charge donnée, l'évolution de la pression de sortie que suivant deux fonctions affines de la pression d'entrée, c'est-à-dire suivant une loi représentée par deux segments de droites.

Bien qu'il existe par ailleurs des compensateurs permettant une évolution de la pression de sortie suivant trois régimes différents, ces compensateurs présentent à ce jour une complexité structurelle qui rend leur fabrication assez délicate et relativement coûteuse.

Un exemple d'un tel compensateur, conforme aux caractéristiques énoncées dans le préambule, est donné par le document GB-A-2 060 102.

Dans le compensateur connu de ce document, le nombre de joints et de pièces élémentaires devant faire l'objet d'un usinage et d'un montage précis est très important, ce qui conduit à une fabrication délicate et coûteuse.

Dans ce contexte, le but de la présente invention est de proposer un compensateur permettant une évolution de la pression de sortie suivant une loi à plus de deux pentes et dont la réalisation soit néanmoins relativement simple.

A cette fin, le dispositif de l'invention est essentiellement caractérisé en ce que le premier piston est au moins partiellement annulaire et en ce que le second piston coulisse à l'intérieur de cette partie annulaire du premier piston.

Grâce à ces caractéristiques, il est en effet apparu possible de réaliser un compensateur à plusieurs pentes dont le corps n'est percé que d'un seul alésage et dont un seul piston est creux, ce qui limite les problèmes d'usinage et réduit le nombre de pièces nécessaires.

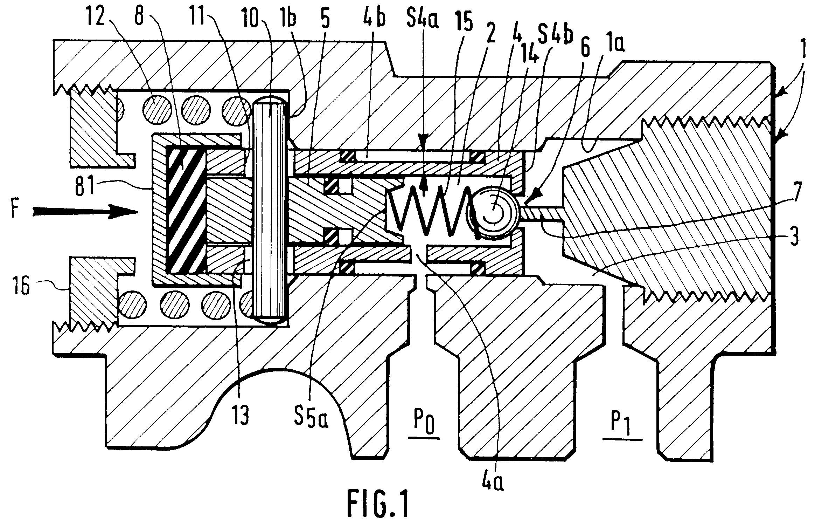

Selon un premier mode possible de réalisation de l'invention (Figure 1), les moyens d'appui comprennent un disque de réaction qui constitue l'organe déformable.

Dans ce cas, il est souhaitable que le second piston se trouve en contact avec l'organe déformable par une surface dont le rapport à la section de pression de ce piston est supérieur au rapport des première et seconde sections de pression du premier piston.

D'autre part, les moyens de blocage comprennent alors par exemple une broche transversale solidaire du second piston et une surface d'arrêt d'une lumière radiale pratiquée dans le premier piston et traversée par la broche.

De préférence, le clapet comprend essentiellement une bille logée dans le premier piston et poussée par un ressort contre le bord interne d'un orifice traversant ce piston, et l'élément coopérant avec ce clapet est un doigt solidaire du corps et susceptible de traverser l'orifice pour repousser la bille.

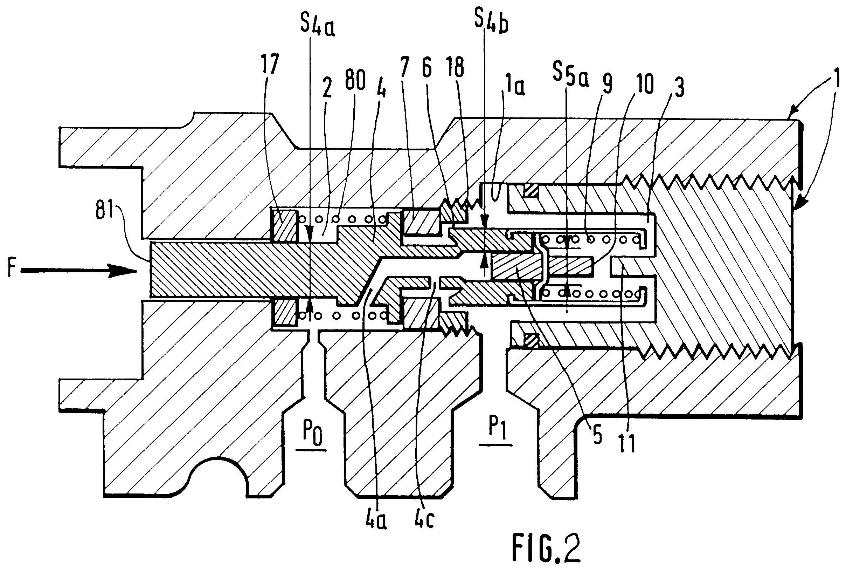

Selon un second mode possible de réalisation de l'invention (Figure 2), le clapet comprend par exemple un bord annulaire formé par une extension radiale externe du premier piston et l'élément coopérant avec ce clapet est un joint formant siège pour ce bord annulaire.

Dans ce cas, on peut avantageusement prévoir que le second piston présente la même section de pression aux première et seconde chambres, et que les moyens de blocage comprennent au moins une face axiale du second piston qui est tournée vers l'extérieur du premier piston.

Dans ce second mode de réalisation de l'invention, l'organe déformable est par exemple un ressort qui repousse le second piston dans un sens qui tend à s'opposer au déplacement relatif de ce second piston par rapport au premier en direction de la position relative extrême de ces pistons.

D'autres caractéristiques et avantages de l'invention ressortiront clairement de la description qui en est faite ci-après, à titre indicatif et nullement limitatif, en référence aux dessins annexés, parmi lesquels:

- la Figure 1 est une vue schématique en coupe d'un dispositif conforme à un premier mode de réalisation de l'invention ;

- la Figure 2 est une vue schématique en coupe d'un dispositif conforme à un second mode de réalisation de l'invention ; et

- la Figure 3 est un schéma représentant l'évolution de la pression de sortie (P1) en fonction de la pression d'entrée (Po) dans un dispositif conforme à l'invention.

Pour des raisons de clarté et de simplicité, les éléments assurant les mêmes fonctions sont, sur les Figures 1 et 2, affectés des mêmes chiffres de référence.

Le dispositif de l'invention est destiné à permettre de faire varier une pression de sortie P1 en fonction d'une pression d'entrée Po et d'une force de consigne F.

Ce dispositif comprend un corps allongé 1 percé d'un alésage 1a, épaulé ou non et partagé en deux chambres 2 et 3 remplies de fluide, la première chambre 2 étant soumise à la pression d'entrée Po et la seconde chambre 3 étant soumise à la pression de sortie P1.

Un premier piston 4, au moins partiellement annulaire, est monté coulissant dans l'alésage 1a et un second piston 5 est monté coulissant à l'intérieur de la partie annulaire du premier piston 4.

Le premier piston 4 présente des première et seconde sections de pression S4a et S4b dans les chambres 2 et 3 respectives et le second piston 5 présente une section de pression S5a exposée au moins à la pression de la première chambre 2.

Le premier piston 4 porte un clapet 6 coopérant avec un élément 7 qui est solidaire du corps 1 et détermine l'ouverture ou la fermeture de ce clapet en fonction de la position du premier piston 4 dans l'alésage 1a.

Comme le montre la Figure 1, ce clapet peut être constitué par une bille 14 logée à l'intérieur du piston 4 et poussée par un ressort 15 contre le bord interne d'un orifice traversant ce piston, l'élément coopérant avec ce clapet étant alors constitué par un doigt 7 solidaire du corps 1 et susceptible de traverser l'orifice pour repousser la bille 14 hors de son siège.

Comme le montre la Figure 2, le clapet 6 peut aussi être constitué par un bord annulaire formé par une extension radiale externe du premier piston 4, l'élément coopérant avec ce clapet étant alors un joint formant siège pour ce bord annulaire.

Quel que soit le mode de réalisation, le clapet 6 est ouvert en permanence, pour les valeurs basses de la pression d'entrée Po et jusqu'à une valeur limite Po,1 de celle-ci.

Initialement, le fluide présent dans la première chambre 2 communique donc librement avec le fluide présent dans la seconde chambre 3 et tout accroissement de la pression d'entrée Po s'accompagne d'un accroissement identique de la pression de sortie P1 par libre déplacement volumique de fluide de la première chambre 2 vers la seconde 3.

Le premier piston 4 est sollicité vers la droite sur les Figures 1 et 2, en direction d'une position d'ouverture permanente pour laquelle le clapet est ouvert en permanence, par une force élastique transmise à ce premier piston par des moyens d'appui 8, 80, 81 qui seront détaillés ultérieurement.

Cependant le premier piston 4 se trouve aussi sollicité, dans la direction opposée, par des moyens de réaction qui tendent à écarter ce piston de sa position d'ouverture permanente et opposent une résistance au moins partielle à tout déplacement de volume depuis la première chambre vers la seconde dès que la pression d'entrée Po est supérieure à sa valeur limite Po,1.

Ces moyens de réaction, qui comprennent le second piston 5, un organe déformable 8 ou 9, et des moyens de blocage 10, 11, seront détaillés en référence à chaque mode de réalisation illustré.

Dans le premier mode de réalisation de l'invention, représenté sur la Figure 1, le second piston 5 est cylindrique, plein, et coulisse de façon étanche à l'intérieur du premier piston 4, ce dernier étant cylindrique, creux et coulissant de façon étanche dans une partie non épaulée de l'alésage 1a.

La première chambre 2 est formée à l'intérieur du premier piston 4 et communique, à travers un orifice 4a et un espace annulaire 4b de ce piston, avec une source de fluide à la pression d'entrée Po.

Le second piston 5 est traversé par une broche 10 appuyée vers un épaulement interne 1b du corps 1 par un ressort 12 contraint par une bague 16 vissée sur le corps 1.

La broche 10 traverse une lumière radiale 13 pratiquée dans le premier piston 4 de manière à permettre un certain déplacement relatif des pistons 4 et 5, ce déplacement étant limité par la possibilité offerte à la broche 10 de venir en contact avec la surface d'arrêt 11 formant la périphérie de la lumière 13.

La face axiale du second piston 5 qui se trouve à l'extérieur de la première chambre 2 s'appuie sur un disque de réaction 8 enserré dans une coupelle rigide 81 et dont la surface restante est en appui contre la face annulaire axiale que présente le premier piston 4 à l'opposé de la seconde chambre 3.

Le disque de réaction 8, qui reçoit par l'intermédiaire de la coupelle 81 une force de consigne F dont l'intensité fait varier la valeur limite Po,1, peut par exemple être réalisé en un matériau élastomère, se comporte comme un organe déformable et incompressible, et joue avec le ressort 12 le rôle de moyen d'appui.

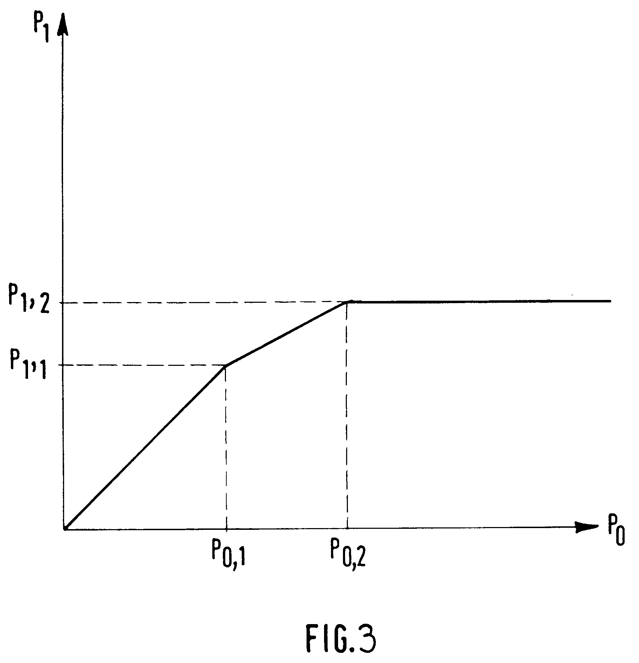

Le fonctionnement du dispositif représenté sur la Figure 1 peut être compris de l'examen des Figures 1 et 3 et des explications suivantes.

Pour une force F minimale et pour des valeurs initialement nulles des pressions effectives d'entrée Po et de sortie P1, le clapet 6 est ouvert en permanence, de sorte que tout accroissement de Po s'accompagne d'un accroissement identique de P1, et que P1 est égal à Po.

L'égalité de P1 et Po se maintient ainsi sur toute une plage des valeurs basses de Po et P1.

Néanmoins, l'élévation de pression dans les chambres 2 et 3 s'accompagne d'une force croissante exercée vers la gauche sur le premier piston qui subit cette pression sur sa section S4a, et sur le second piston qui subit cette pression sur sa section S5a.

Cette force, exercée à l'encontre de celle qu'exercent les moyens d'appui 8, 12, 81, repousse le premier piston 4 sur la gauche et met fin, pour la valeur limite Po,1 de la pression d'entrée, à l'ouverture permanente du clapet 6.

L'équilibre ultérieur est alors régi par l'équilibre des forces qu'exercent l'un sur l'autre les premier et second pistons par l'intermédiaire du disque de réaction 8.

Comme le second piston 5 s'appuie sur le disque par une surface égale à sa section de pression S5a, il apparaît que $Po.S5a = p.S5a$ où p est la pression dans le disque de réaction 8.

Comme par ailleurs, si l'on néglige la section du clapet 6, $P1.S4b = p.S4a$, il en résulte que $P1 = P0.S4a / S4b$.

Comme enfin S4a est inférieur à S4b, la pente de la loi $P1 = f (Po)$ est inférieure à 1 au-delà de la valeur limite Po,1, ce que montre la Figure 3.

Cette situation se poursuit jusqu'à ce que la pression Po atteigne une seconde valeur limite Po,2 pour laquelle la surface d'arrêt 11 vient en appui contre la broche 10.

Le mouvement relatif des pistons 4 et 5 étant bloqué, ces derniers se comportent alors comme s'ils étaient constitués d'une seule pièce ne présentant, dans le mode de réalisation de la Figure 1, aucune surface soumise à la pression d'entrée Po et toute élévation ultérieure de la pression P1 devient impossible.

Dans le second mode de réalisation de l'invention, représenté sur la Figure 2, le piston 5 est également cylindrique, plein et coulisse de façon étanche à l'intérieur d'une partie annulaire du premier piston 4.

Le premier piston 4 coulisse lui-même de façon étanche, grâce à un joint 17, dans l'alésage 1a et reçoit la force de consigne F sur sa face axiale externe 81.

Ce piston 4 est par ailleurs sollicité vers la droite par un ressort 80 prenant appui sur le corps 1 et exerçant sur ce piston une force de même direction que la force de consigne F.

Le premier piston 4 est susceptible de se débattre, en fonction des forces qu'il subit, de part et d'autre d'un joint 7 retenu par une bague 18.

Dans sa position de repos, correspondant aux valeurs basses de Po, le premier piston autorise un libre déplacement volumique de fluide de la première chambre 2 vers la seconde 3 à travers des orifices tels que 4a et 4c pratiqués dans ce piston 4.

Le second piston 5 est repoussé vers l'intérieur du piston 4 par un ressort 9 prenant appui sur le premier piston 4.

Le fonctionnement du dispositif conforme à ce second mode de réalisation est le suivant.

Le clapet 6 est initialement ouvert et la pression de sortie P1 suit la pression d'entrée Po jusqu'à ce que celle-ci atteigne sa première valeur limite Po,1.

Pendant tout ce temps, la pression d'entrée Po exerce sur la première section S4a du premier piston 4 une force qui le repousse vers l'extérieur en comprimant le ressort 80.

Au point où la pression d'entrée Po atteint sa première valeur limite Po,1, le clapet 6 se ferme totalement et tout déplacement volumique depuis la première chambre vers la seconde ne peut plus être réalisé que par déplacement du second piston 5.

Comme cependant un tel déplacement rencontre la résistance du ressort 9, la pression de sortie P1 évolue moins vite, au delà du point P1,1, que la pression d'entrée Po.

Lorsque la pression d'entrée Po atteint une seconde valeur limite Po,2, la face axiale 10 du piston 5 rencontre l'ergot fixe 11 ; tout mouvement ultérieur de ce second piston vers la droite est alors interdit et la pression de sortie se maintient à sa valeur finale P1,2.

Comme le montrent les exemples illustrés sur les Figures 1 et 2, le concept général de l'invention, qui permet de réaliser un compensateur à plus de deux pentes en utilisant un corps percé d'un alésage unique et un seul piston creux, peut être mis en oeuvre de diverses manières.

Néanmoins, le premier mode de réalisation présente une certaine supériorité, tenant à la fois à sa simplicité et au fait que la pente de la grandeur $(P1,2 - P1,1) / (Po,2 - Po,1)$ y est exclusivement déterminée par un rapport de sections.

Par ailleurs il est possible, en créant un épaulement dans l'alésage 1a du dispositif du premier mode de réalisation, de manière que le premier piston 4 présente des sections annulaires différentes de part et d'autre de l'espace annulaire 4b, d'obtenir avec un dispositif ainsi modifié un comportement en pression qui serait, sur la figure 3, représenté par un troisième segment de pente non nulle au delà du point Po,2.

## Revendications

1. Dispositif pour faire varier une pression de sortie en fonction au moins d'une pression d'entrée, comprenant :

   - un corps allongé (1) percé d'un alésage (1a) partagé en au moins deux chambres de pression remplies de fluide dont la première (2) est soumise à la pression d'entrée (Po) et la seconde (3) à la pression de sortie (P1) ;
   - un premier piston (4) coulissant dans l'alésage et servant à délimiter les première et seconde chambres, ce piston (4) présentant des première et seconde sections (S4a, S4b) de pression respectivement exposées aux pressions des première et seconde chambres,
   - un clapet (6) porté par le premier piston et coopérant avec un élément (7) solidaire du corps allongé pour être ouvert ou fermé par cet élément en fonction de la position du premier piston dans l'alésage, ce clapet étant ouvert en permanence pour toute valeur de la pression d'entrée inférieure à une valeur limite, pour permettre un équilibre des pressions de fluide dans les première et seconde chambres, par un libre déplacement volumique entre ces chambres,
   - des moyens d'appui (8, 80, 81) exerçant sur le premier piston une force élastique dont dépend ladite valeur limite de pression et qui sollicite ce piston vers une position d'ouverture permanente pour laquelle le clapet est ouvert en permanence, et
   - des moyens de réaction pour exercer sur le premier piston une force croissante avec la pression d'entrée à l'encontre de la force élastique et dans un sens qui tend à écarter ce piston de sa position d'ouverture permanente, et pour opposer une résistance au moins partielle à tout déplacement volumique depuis la première chambre vers la seconde pour des valeurs de la pression d'entrée supérieures à la valeur limite,
   ces moyens de réaction comprenant eux-mêmes : un second piston (5) coulissant de façon étanche par rapport au premier et présentant une section de pression (S5a) exposée à la pression de la première chambre au moins ; un organe déformable (8, 9) en appui sur le second piston au moins pour recevoir un effort qui déforme cet organe en fonction de la pression d'entrée au moins et pour permettre, par sa déformation, un déplacement relatif des deux pistons vers une position relative extrême sous l'effet d'une augmentation de la pression d'entrée ; et des moyens de blocage (10, 11), propres à empêcher tout déplacement relatif supplémentaire des pistons dès que ceux-ci ont atteint leur position relative extrême, caractérisé en ce que le premier piston (4) est au moins partiellement annulaire et en ce que le second piston (5) coulisse à l'intérieur de cette partie annulaire du premier piston.

2. Dispositif suivant la revendication 1, caractérisé en ce que les moyens d'appui comprennent un disque de réaction (8) qui constitue l'organe déformable.

3. Dispositif suivant la revendication 2, caractérisé en ce que le second piston se trouve en contact avec l'organe déformable par une surface dont le rapport à la section de pression (S5a) de ce piston est supérieur au rapport (S4a/S4b) des première et seconde sections de pression du premier piston.

4. Dispositif suivant la revendication 2 ou 3, caractérisé en ce que les moyens de blocage comprennent une broche transversale (10) solidaire du second piston (5) et une surface d'arrêt (11) d'une lumière radiale (13) pratiquée dans le premier piston (4) et traversée par la broche (10).

5. Dispositif suivant l'une quelconque des revendications 1 à 4, caractérisé en ce que le clapet (6) comprend essentiellement une bille (14) logée dans le premier piston (4) et poussée par un ressort (15) contre le bord interne d'un orifice traversant ce piston, et en ce que le dit élément (7) coopérant avec ce clapet est un doigt solidaire du corps et susceptible de traverser l'orifice pour repousser la bille.

6. Dispositif suivant la revendication 1, caractérisé en ce que le clapet (6) comprend un bord annulaire formé par une extension radiale externe du premier piston (4) et en ce que l'élément (7) coopérant avec ce clapet est un joint formant siège pour ce bord annulaire.

7. Dispositif suivant la revendication 6, caractérisé en ce que le second piston (5) présente la même section de pression (S5a) aux première et seconde chambres, et en ce que lesdits moyens de blocage comprennent au moins une face axiale (10) du second piston qui est tournée vers l'extérieur du premier piston.

8. Dispositif suivant l'une quelconque des revendications 5 à 7, caractérisé en ce que l'organe déformable (9) est un ressort qui repousse le second piston (5) dans un sens qui tend à s'opposer au déplacement relatif de ce second piston par rapport au premier en direction de la position relative extrême de ces pistons.

## Claims

1. Device for varying an output pressure as a function of at least an input pressure, comprising:

    - an elongated body (1) in which is formed a bore (1a) divided into at least two pressure chambers filled with fluid, the first (2) of which is subjected to the input pressure (Po) and the second (3) to the output pressure (P1),
    - a first piston (4) sliding in the bore and serving to delimit the first and second chambers, said piston (4) having first and second pressure sections (S4a, S4b) respectively exposed to the pressures of the first and second chambers,
    - a valve (6) carried by the first piston and cooperating with an element (7) fastened to the elongated body so as to be opened or closed by this element as a function of the position of the first piston in the bore, this valve being continuously open at any value of the input pressure lower than a limit value, in order to permit equilibrium of the fluid pressures in the first and second chambers by free volume displacement between these chambers,
    - bearing means (8, 80, 81) exerting on the first piston an elastic force on which said limit value of the pressure depends and which urges this piston toward a continuously open position in which the valve is continuously open, and
    - reaction means for exerting on the first piston a force increasing with the input pressure against the action of the elastic force and in a direction tending to move this piston away from its continuously open position and to offer at least partial resistance to any volume displacement from the first chamber toward the second at input pressure values higher than the limit value, these reaction means themselves comprising: a second piston (5) sliding sealingly relative to the first and having a pressure section (S5a) exposed at least to the pressure of the first chamber; a deformable member (8, 9) bearing at least against the second piston to receive a force which deforms this member as a function of at least the input pressure and to permit through its deformation a relative displacement of the two pistons toward a relative end position through the action of an increase in the input pressure; and locking means (10, 11) able to prevent any additional relative displacement of the pistons when they have reached their relative end position, characterized in that the first piston (4) is at least partially annular and in that the second piston (5) slides inside this annular part of the first piston.

2. Device according to Claim 1, characterized in that the bearing means comprise a reaction disk (8) which constitutes the deformable member.

3. Device according to Claim 2, characterized in that the second piston is in contact with the deformable member by means of a surface, the ratio of which to the pressure section (S5a) of this piston is greater than the ratio (S4a/S4b) of the first and second pressure sections of the first piston.

4. Device according to Claim 2 or 3, characterized in that the locking means comprise a transverse pin (10) fastened to the second piston (5), and a stop surface (11) of a radial aperture (13) which is formed in the first piston (4) and through which the pin (10) passes.

5. Device according to any of Claims 1 to 4, characterized in that the valve (6) comprises essentially a ball (14) housed in the first piston (4) and pushed by a spring (15) against the inner edge of an orifice passing through this piston, and in that said element (7) cooperating with this valve is a finger fastened to the body and capable of passing through the orifice in order to push back the ball.

6. Device according to Claim 1, characterized in that the valve (6) comprises an annular edge formed by an outer radial extension of the first piston (4), and in that the element (7) cooperating with this valve is a seal forming a seat for this annular edge.

7. Device according to Claim 6, characterized in that the second piston (5) presents the same pressure section (S5a) to the first and second chambers, and in that said locking means comprise at least one axial face (10) of the second piston, this face being turned toward the outside of the first piston.

8. Device according to any of Claims 5 to 7, characterized in that the deformable member (9) is a spring which pushes back the second piston (5) in a direction tending to oppose the relative displacement of this second piston in relation to the first in the direction of the relative end position of these pistons.

## Patentansprüche

1. Vorrichtung zum Verändern eines Ausgangsdrucks wenigstens in Abhängigkeit von einem Eingangsdruck, mit:

    - einem langgestreckten Körper (1), der von einer Bohrung (1a) durchbrochen ist, die in wenigstens zwei Druckkammern unterteilt ist, die mit Fluid gefüllt sind und von denen die erste Kammer (2) dem Eingangsdruck (Po) und die zweite Kammer (3) dem Ausgangsdruck (P1) ausgesetzt ist;

- einem ersten Kolben (4), der in der Bohrung gleitet und dazu dient, die erste und die zweite Kammer abzugrenzen, wobei dieser Kolben (4) einen ersten und einen zweiten Druckquerschnitt (S4a, S4b) aufweist, die dem Druck in der ersten bzw. zweiten Kammer ausgesetzt sind;

- einem von dem ersten Kolben getragenen Ventilelement (6), das mit einem fest mit dem langgestreckten Körper verbundenen Element (7) zusammenwirkt, um von diesem Element in Abhängigkeit von der Stellung des ersten Kolbens in der Bohrung geöffnet oder geschlossen zu werden, wobei das Ventilelement permanent für jeden Wert des Eingangsdrucks geöffnet ist, der kleiner als ein Grenzwert ist, um einen Druckausgleich der Fluide in der ersten und in der zweiten Kammer durch eine freie Volumenverschiebung zwischen diesen beiden Kammern zu ermöglichen;

- Abstützmitteln (8, 80, 81), die auf den ersten Kolben eine elastische Kraft ausüben, von welcher der Grenzwert des Druckes abhängt und welche den Kolben in eine permanent geöffnete Position beaufschlagt, bei welcher das Ventilelement permanent geöffnet ist; und

- Reaktionsmitteln, um auf den ersten Kolben eine mit dem Eingangsdruck anwachsende Kraft entgegen der elastischen Kraft und in einer Richtung auszuüben, welche den Kolben von seiner permanent geöffneten Position zu entfernen sucht, und um jeder Volumenverschiebung von der ersten Kammer zur zweiten Kammer einen wenigstens teilweisen Widerstand für Werte des Eingangsdruckes entgegenzusetzen, die größer als der Grenzwert sind;

wobei die Reaktionsmittel ihrerseits enthalten: einen zweiten Kolben (5), der in dichter Weise bezüglich des ersten Kolbens gleitet und einen Druckquerschnitt (S5a) aufweist, der wenigstens dem Druck in der ersten Kammer ausgesetzt ist; ein verformbares Organ (8, 9), welches wenigstens an dem zweiten Kolben anliegt, um eine Kraft aufzunehmen, welches dieses Organ wenigstens in Abhängigkeit von dem Eingangsdruck verformt, und um durch seine Verformung eine Verstellung der beiden Kolben relativ zueinander in eine relative Endstellung unter der Wirkung einer Erhöhung des Eingangsdrucks zu ermöglichen; und Blockiermittel (10, 11), die jede weitere Relativverstellung der Kolben verhindern können, sobald diese ihre relative Endstellung erreicht haben, dadurch gekennzeichnet, daß der erste Kolben (4) wenigstens teilweise ringförmig ist und daß der zweite Kolben (5) im Inneren dieses ringförmigen Teiles des ersten Kolbens gleitet.

2. Vorrichtung nach Anspruch 1, dadurch gekennzeichnet, daß die Abstützmittel eine Reaktionsscheibe (8) enthalten, welche das verformbare Organ bildet.

3. Vorrichtung nach Anspruch 2, dadurch gekennzeichnet, daß sich der zweite Kolben in Berührung mit dem verformbaren Organ mittels einer Fläche befindet, deren Verhältnis zum Druckquerschnitt (S5a) dieses Kolbens größer als das Verhältnis (S4a/S4b) zwischen dem ersten und dem zweiten Druckquerschnitt des ersten Kolbens ist.

4. Vorrichtung nach Anspruch 2 oder 3, dadurch gekennzeichnet, daß die Blockiermittel einen Querstift (10) enthalten, der fest mit dem zweiten Kolben (5) verbunden ist, und eine Anschlagfläche (11) einer radialen Öffnung (13), die in dem ersten Kolben (4) ausgebildet ist und von dem Stift (10) durchquert wird.

5. Vorrichtung nach einem der Ansprüche 1 bis 4, dadurch gekennzeichnet, daß das Ventilelement (6) im wesentlichen eine Kugel (14) enthält, die in dem ersten Kolben (4) angeordnet ist und von einer Feder (15) gegen den Innenrand einer diesen Kolben durchquerenden Öffnung gedrückt wird, und daß das Element (7), welches mit dem Ventilelement zusammenwirkt, ein fest mit dem Körper verbundener Zapfen ist, der die Öffnung durchqueren kann, um die Kugel zurückzudrücken.

6. Vorrichtung nach Anspruch 1, dadurch gekennzeichnet, daß das Ventilelement (6) einen ringförmigen Rand enthält, der durch einen radial äußeren Fortsatz des ersten Kolbens (4) gebildet ist, und daß das Element (7), welches mit dem Ventilelement zusammenwirkt, eine Dichtung ist, welche einen Sitz für diesen ringförmigen Rand bildet.

7. Vorrichtung nach Anspruch 6, dadurch gekennzeichnet, daß der zweite Kolben (5) denselben Druckquerschnitt (S5a) wie die erste und die zweite Kammer aufweist, und daß die Blockiermittel wenigstens eine axiale Fläche (10) des zweiten Kolbens enthalten, die zum Außenraum des ersten Kolbens gerichtet ist.

8. Vorrichtung nach einem der Ansprüche 5 bis 7, dadurch gekennzeichnet, daß das verformbare Organ (9) eine Feder ist, welche den zweiten Kolben (5) in einer Richtung zurückdrückt, die der Relativverstellung des zweiten Kolbens bezüglich des ersten Kolbens in der Richtung der relativen Endstellung dieser beiden Kolben entgegenzuwirken sucht.

FIG.1

9

FIG.2

$P_1$

$P_{1,2}$

$P_{1,1}$

$P_{0,1}$  $P_{0,2}$

$P_0$

FIG.3